# EUROPÄISCHE PATENTSCHRIFT

(11) **EP 2 898 223 B1**
(45) Veröffentlichungstag und Bekanntmachung des Hinweises auf die Patenterteilung: **04.12.2019**
(21) Anmeldenummer: 13785341.2
(22) Anmeldetag: 19.09.2013
(51) Int. Cl.: F15B 15/14, F16B 4/00, F16B 21/18

(54) **KOLBENEINHEIT EINES ARBEITSZYLINDERS**
WORKING CYLINDER PISTON UNIT
UNITÉ DE PISTON POUR VÉRIN

(30) Priorität: 19.09.2012 DE 202012008999 U
(43) Veröffentlichungstag der Anmeldung: 29.07.2015
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2013/000531
(87) Internationale Veröffentlichungsnummer: WO 2014/044243

(56) Entgegenhaltungen:
- FR-A- 1 135 349
- FR-A- 1 363 852
- JP-A- H08 219 115
- JP-A- 2001 165 118
- US-A- 5 030 148
- US-A1- 2009 110 476

## Beschreibung

Die Erfindung betrifft eine Kolbeneinheit eines Arbeitszylinders, insbesondere vorliegend als hydraulischer oder pneumatischer Druckstromverbraucher.

Arbeitszylinder als hydraulische oder pneumatische Druckstromverbraucher, welche eine Kolbeneinheit aufweisen, sind generell aus dem Stand der Technik bekannt.
Derartige Arbeitszylinder sind in der Regel mehrteilig ausgebildet, wobei die Kolbeneinheit aus einem Kolben und einer, mit diesem verbundenen Kolbenstange besteht.

Die Verbindung des Kolbens mit der Kolbenstange erfolgt dabei bekanntermaßen durch eine form- und/oder kraft- und/oder stoffschlüssige Verbindung, wobei die Verbindung je nach Anwendungsfall sowohl lösbar als auch nicht lösbar ausgeführt sein kann.

Lösbare Verbindungen im engeren Sinne werden hierbei meist durch Verschrauben des Kolbens mit der Kolbenstange oder durch Passverbindungen realisiert, während die nicht lösbaren Verbindungen in der Regel durch Verschweißen, Verlöten oder Verkleben des Kolbens mit der Kolbenstange bereitgestellt werden.

Des Weiteren ist es aus dem Stand der Technik bekannt, Komponenten einer Kolbeneinheit, insbesondere Kolben und Kolbenstange, mittels eines Kopplungsrings formschlüssig miteinander zu verbinden.
Hierzu weisen die zu verbindenden Komponenten jeweils korrespondierende Ringnuten auf, in welche der Kopplungsring eingreift und so den Formschluss zwischen den Komponenten bereitstellt.
Ein Nachteil derartiger Verbindungen liegt darin, dass der Kopplungsring gegenüber der Breite der Ringnuten ein gewisses Untermaß aufweist, damit der Kopplungsring bei der Montage seine Endlage in den Ringnuten einnehmen kann. Hieraus resultiert ein minimales Spiel, welches bei Lastzustandswechseln der Kolbeneinheit zu minimalen axialen Relativbewegungen zwischen Kolben und Kolbenstange führen kann.

Durch diese Relativbewegungen entstehen unerwünschte Abriebschrotungen der zwischen den Komponenten vorhandenen Dichtungselemente, welche im ungünstigen Fall zu einem Defekt etwa vorhandener Dichtungselemente und somit zu einem Ausfall des Arbeitszylinders führen. Ferner kann sich das Spiel durch die dynamischen Prozesse und damit einhergehendem Abrieb auch im Bereich von Ringnuten und Kopplungsring weiter erhöhen.

US 5 030 148 zeigt eine Kobeneinheit gemäß dem Oberbegriff des Anspruchs 1.

Es ist daher Aufgabe der Erfindung, eine Kolbeneinheit für einen Arbeitszylinder bereitzustellen, welche besonders einfach und kostengünstig herstellbar ist und welche gleichzeitig eine hohe Dauerfestigkeit und dadurch eine erhöhte Verwendungsdauer aufweist.

Die Aufgabe wird durch die im Patentanspruch 1 aufgeführten Merkmale gelöst. Bevorzugte Weiterbildungen ergeben sich aus den Unteransprüchen.

Eine erfindungsgemäße Kolbeneinheit eines Arbeitszylinders weist einen ersten Kopplungspartner und einen zweiten Kopplungspartner auf. Der erste Kopplungspartner ist hierbei als Kolben und der zweite Kopplungspartner als Kolbenstange ausgebildet.

Darüber hinaus ist erfindungsgemäß der zweite Kopplungspartner in den ersten Kopplungspartner eingeschoben.

Unter eingeschoben wird in diesem Zusammenhang verstanden, dass der zweite Kopplungspartner von dem ersten Kopplungspartner radial umgriffen wird.

Die technische Lösung kann sowohl bei einer Kolbeneinheit Anwendung finden, bei welcher die Kolbenstange nur abschnittsweise in den Kolben eingeschoben ist und der Kolben mit geschlossenem Boden ausgebildet ist, wie dies beispielsweise bei einem Differenzialarbeitszylinder regelmäßig der Fall ist, als auch bei einer Kolbeneinheit, bei der eine durchgehende Kolbenstange den Kolben durchsetzt, wie dies beispielsweise bei einem Gleichlaufzylinder der Fall ist.

Die Kolbeneinheit zeichnet sich erfindungsgemäß dadurch aus, dass die Kopplungspartner jeweils eine Ringnut aufweisen, welche vorzugsweise umlaufend ausgeführt ist und wobei die Ringnut des eingeschobenen Kopplungspartners durch eine Außennut und die Ringnut des anderen Kopplungspartners durch eine Innennut gebildet werden.

Die axiale Positionierung der Ringnut in den Kopplungspartnern erfolgt dabei erfindungsgemäß derart, dass sich die Ringnuten im gekoppelten Zustand der Kopplungspartner korrespondierend gegenüberliegen.
Unter einem korrespondierenden Gegenüberliegen wird in diesem Zusammenhang verstanden, dass die Öffnungsbereiche der Ringnuten einander zugewandt sind und sich, in axialer Richtung des Arbeitszylinders, auf gleicher Höhe befinden.

Darüber hinaus weist eine erfindungsgemäße Kolbeneinheit einen elastisch spannbaren Kopplungsring auf.

Dieser Kopplungsring ist bei einer elastischen Verformung in dessen radiale Spannrichtung vollständig von der Ringnut eines Kopplungspartners aufnehmbar.
Die radiale Spannrichtung beschreibt dabei die Verformungsrichtung des Kopplungsrings, in welche sich dieser durch eine äußere radiale Krafteinwirkung verformt, wodurch eine radiale Vorspannung in dem Kopplungsring erzeugt wird.

Dabei ist es erfindungsgemäß je nach Anwendungsfall möglich, dass die den Kopplungsring vollständig aufnehmende Ringnut entweder in dem ersten Kopplungspartner, also dem Kolben oder in dem zweiten Kopplungspartner, also der Kolbenstange, angeordnet ist.
Eine Anordnung der, den Kopplungsring vollständig aufnehmenden, Ringnut in dem Kolben ist insbesondere dann besonders von Vorteil, wenn die Kolbenstange hohl und mit einer verhältnismäßig geringen Wandungsstärke ausgebildet werden soll.

Das vollständige Aufnehmen des Kopplungsrings in der Ringnut eines Kopplungspartners erfolgt besonders vorteilhaft gerade soweit, dass ein ungehindertes Einschieben des zweiten Kopplungspartners in den ersten Kopplungspartner gewährleistbar ist.
Hierzu weist die, den Kopplungsring vollständig aufnehmende, Ringnut erfindungsgemäß einen Ausdehnungsraum auf, in welchen der Kopplungsring, während des Ineinanderschiebens der Kopplungspartner, ausweichen kann.

Bei einem Einstellen einer Montageendlage, also einer Lagebeziehung der Kopplungspartner zueinander, bei welcher sich deren Ringnuten korrespondierend gegenüberliegen, führt der Kopplungsring erfindungsgemäß eine Verformung in dessen Entspannrichtung aus.
In diesem Zusammenhang beschreibt die Entspannrichtung die Verformungsrichtung des Kopplungsrings, in welche sich dieser aufgrund der vorhandenen Vorspannung verformt.

Die Verformung des Kopplungsrings in dessen Entspannrichtung bewirkt auf besonders vorteilhafte Weise, dass dieser in der Montageendlage in die Ringnut des anderen Kopplungspartners eindringt und mit diesem somit in Eingriff steht. Durch ein Anliegen der axialen Außenwandungen des Kopplungsrings an den axialen Wandungen der Ringnuten beider Kopplungspartner wird eine formschlüssige Verbindung zwischen den Kopplungspartnern bereitgestellt. Die Kopplungspartner sind durch den Formschluss in ihrer axialen Lagebeziehung zueinander festgelegt. Axiale Kräfte bewirken eine Scherbelastung des Kopplungsrings. Es ist von der erfindungsgemäßen Lösung auch umfasst, dass mehrere Kopplungsringe axial aneinander anliegend in einem entsprechend breit geformten Ringnutpaar angeordnet sein können, um hohe Scherkräfte aufnehmen zu können. Vorzugsweise liegt der Kopplungsring im Kopplungszustand mit seiner radialen Außenwandung federnd auf der Nutengrundwandung der Ringnut des anderen Kopplungspartners an, sodass er in seiner Lage zuverlässig festgelegt ist.

Durch die vorgestellte Lösung wird somit eine Kolbeneinheit eines Arbeitszylinders bereitgestellt, bei welcher die benötigten Kopplungspartner ausschließlich durch die Verwendung eines tragfähigen Kopplungsrings miteinander verbindbar sind, wobei die Verbindung besonders einfach durch Einschieben der Kopplungspartner ineinander erfolgt.

Diese Kopplungslösung reduziert die Fertigungs-, Material- und Montagekosten, die ihrerseits einen erheblichen Einfluss auf die Reduzierung der Energiekosten ausüben.

Negative Auswirkungen einer Wärmebeaufschlagung, wie dies beispielsweise bei einer Schrumpfkopplung oder bei einer Schweißverbindung der Fall sein kann, entfallen.

Gegenüber den bekannten Lösungen weist eine erfindungsgemäße Kolbeneinheit somit die technologischen Vorteile auf, dass diese zum einen besonders einfach herstellbar ist und dass zum anderen keine zusätzlichen Verfahrensschritte, insbesondere zum Herstellen einer stoffschlüssigen Verbindung der Kopplungspartner, notwendig sind, wodurch vor allem die Herstellungskosten einer solchen Kolbeneinheit gesenkt werden können, da die Montage- und Energiekosten reduziert werden.

Darüber hinaus zeichnet sich eine erfindungsgemäße Kolbeneinheit gegenüber herkömmlichen Vorrichtungen durch eine höhere Dauerfestigkeit und somit durch eine gesteigerte Verwendungsdauer aus. Als weiterer wesentlicher Vorteil kann jede Winkellage der Kopplungspartner zueinander und somit die Ausrichtung des Kolbens in dem Zylinder problemlos und ohne zusätzlichen Aufwand bereitgestellt werden.

Die erfindungsgemäße Kolbeneinheit zeichnet sich ferner dadurch aus, dass der einzuschiebende zweite Kopplungspartner, gegenüber einem Innenmaß des ersten Kopplungspartners ein entsprechendes Übermaß aufweist und dass so in der Montageendlage eine Presspassung zwischen den Kopplungspartnern entsteht. Die Presspassung stellt einen Reibschluss zwischen den Kopplungspartnern her. Über den Reibschluss sind axial wirkende Kräfte aufnehmbar. Zudem sind die Kopplungspartner gegen Verdrehung gesichert.

Auf diese Weise wird, als besonderer technologischer Vorteil der Lösung, eine Hybridkopplung aus einer kraftschlüssigen Kopplung durch die Presspassung und einer formschlüssigen Kopplung durch den Kopplungsring bereitgestellt, welche sich durch eine Erhöhung der maximal aufnehmbaren axialen Kräfte und eine Verbesserung der Dauerfestigkeit der Kolbeneinheit auszeichnet. Die axial aufzunehmenden Kräfte können auf die beiden Kopplungen aufgeteilt werden, wobei das Verhältnis durch konstruktive Maßnahmen festgelegt werden kann.

Die beiden Kopplungspartner werden durch den Reibschluss axial spielfrei zueinander festgelegt. Ein eventuell unter einem Wechsel von Belastung und Entlastung der Kolbeneinheit im bestimmungsgemäßen Betrieb auftretendes, axiales Wandern der Kopplungspartner zueinander, welches beispielsweise zu einer Beschädigung etwa vorhandener Dichtungselemente führen könnte, kann als besonderer Vorteil somit verhindert werden.

Derartige Dichtungselemente liegen insbesondere bei Gleichlaufzylindern, bei welchen die Kolbenstange den Kolben durchsetzt, vor und dienen dazu, einen Übertritt eines Arbeitsmediums von einem Arbeitsraum des Gleichlaufzylinders in den anderen Arbeitsraum zu verhindern.

Es wirken erfindungsgemäß die formschlüssige Verbindung über den Kopplungsring und die kraftschlüssige Verbindung durch den Reibschluss zwischen den Kopplungspartner zusammen.

Insbesondere wird bei Kolbeneinheiten einfachwirkender Arbeitszylinder durch den Reibschluss die Relativposition zwischen den Kopplungspartnern, die diese unter hohen Belastungen einnehmen und einer Spielendlage des Kopplungsrings zu den axialen Seitenwandungen der Ringnuten entspricht, auch bei einem Lastzustandswechsel beibehalten. Der Reibschluss wird also zumindest bei vollem Betriebsdruck überwunden, sodass die Kopplungspartner in die Spielendlage gebracht und dort durch den Formschluss an einer weiteren axialen Relativbewegung gehindert werden. Der Reibschluss verhindert jedoch eine axiale Rückwärtsbewegung aus dieser Spielendlage und legt also die Kopplungspartner in der Relativposition der Spielendlage zueinander fest. Dies gilt entsprechend bei einer Kolbeneinheit eines Differenzialarbeitszylinders, bei der die seitens des Kolbenstangenraumes auf den Kolben beaufschlagbare Kraft geringer ist, als die durch die kraftschlüssige Verbindung durch den Reibschluss aufnehmbare Kraft während die seitens des Kolbenbodenraums auf den Kolben beaufschlagbare Kraft jedoch größer ist.

Durch die vorgestellte Lösung wird somit eine Kolbeneinheit eines Arbeitszylinders bereitgestellt, bei welcher die benötigten Kopplungspartner zum einen formschlüssig durch die Verwendung eines tragfähigen Kopplungsrings miteinander verbindbar sind, wobei die Verbindung besonders einfach durch Einschieben der Kopplungspartner ineinander erfolgt.
Zum anderen wird durch den bereitgestellten Reibschluss eine Relativbewegung zwischen den Kopplungspartner vollständig verhindert.

Erfindungsgemäß ist es darüber hinaus ebenfalls möglich, dass die axialen Kräfte allein durch die kraftschlüssige Presspassung aufgenommen werden, wobei der Formschluss durch den Kopplungsring in diesem Fall lediglich als Sicherung gegen ein Ausziehen des eingeschobenen zweiten Kopplungspartners aus dem ersten Kopplungspartner wirkt. In diesem Fall wird es als besonderer vorteil ermöglicht, die kraftschlüssige Presspassung einschließlich deren notwendiger Kontaktflächen gemäß den normativen Lastzuständen zu dimensionieren, zugleich aber mittels der zusätzlichen formschlüssigen Verbindung mittels des Kopplungsringes kritische Überbelastungen zuverlässig aufgenommen werden können.

In einer bevorzugten Weiterbildung der Erfindung ist die Kolbenstange als Hohlelement ausgebildet.

Eine solche Ausbildung als Hohlelement ermöglicht die Bereitstellung einer besonders leichten Kolbenstange und dadurch eine Optimierung des Gesamtgewichts einer, eine derart ausgebildete Kolbenstange aufweisenden, Kolbeneinheit.

Darüber hinaus ist bei einer hohlen Ausbildung der Kolbenstange die den Kopplungsring vollständig aufnehmende Ringnut erfindungsgemäß in dem Kolben angeordnet, wodurch besonders vorteilhaft eine strukturelle Schwächung der Kolbenstange durch eine entsprechend tiefe Ringnut vermieden wird.

In einer weiteren vorteilhaften Variante der Erfindung weist der Kopplungsring oder der, den Kopplungsring nicht vollständig aufnehmende, Kopplungspartner eine Anlaufschräge auf.

Durch diese Anlaufschräge wird während des Einschiebens des einen Kopplungspartners in den anderen Kopplungspartner, der Kopplungsring gespannt und die vollständige Aufnahme des Kopplungsrings in der jeweiligen Ringnut des, den Kopplungsring vollständig aufnehmenden, Kopplungspartners bewirkt.

Der Kopplungsring muss somit, als besonderer technologischer Vorteil, vor dem Ineinanderschieben der Kopplungspartner nicht durch zusätzliche Vorrichtungen oder Aufwendungen in die, ihn vollständig aufnehmende, Ringnut des jeweiligen Kopplungspartners gefügt werden.

Hinsichtlich der Anlaufschräge versteht sich für den Fachmann von selbst, dass bei speziellen Konfigurationen, insbesondere des Kopplungsringes, anstelle einer einzigen Anlaufschräge auch mehrere einzelne Anlaufschrägen an dem jeweiligen Kopplungspartner vorhanden sein können.

Insbesondere bei einer Anwendung der Kolbeneinheit mit einer durchgehenden Kolbenstange, beispielsweise innerhalb eines Gleichlaufzylinders, sieht die Erfindung vor, dass zwischen den beiden Kopplungspartnern ein Dichtelement angeordnet ist, welches im Bereich der formschlüssigen Verbindung einen Übertritt eines Arbeitsmediums aus dem einen Arbeitraum in den anderen Arbeitsraum des Gleichlaufzylinders verhindert.

Bei einem Einschieben des zweiten Kopplungspartners in den ersten Kopplungspartner kann ein solches Dichtelement besonders vorteilhaft, im Bereich der Anlaufschräge des zweiten Kopplungspartners, in dem ersten Kopplungspartner vorgehalten und so eine besonders einfache Montage des Dichtelements gewährleistet werden.

Die Kopplungspartner einer erfindungsgemäßen Kolbeneinheit weisen in einer bevorzugten Weiterbildung axial versetzt weitere Ringnuten zur Aufnahme weiterer, in gleicher Weise axial versetzter, Kopplungsringe auf.

Das Vorsehen mehrerer Ringnuten und mehrerer Kopplungsringe ist insbesondere dann von Vorteil, wenn die Verbindung während einer Verwendung des, die Kolbeneinheit aufnehmenden, Arbeitszylinders hohen axialen Kräften ausgesetzt werden soll.

Um auch bei einer Anordnung mehrerer Kopplungsringe zwischen den Kopplungspartnern ein sicheres und schadfreies Ineinanderschieben der Kopplungspartner zu gewährleisten, weisen die Ringnuten vorzugsweise ebenfalls Anlaufschrägen auf, wobei durch die Anlaufschrägen ein erneutes vollständiges Aufnehmen der mehreren Kopplungsringe in den jeweiligen Ringnuten des, die Kopplungsringe vollständig aufnehmenden, Kopplungspartners bewirkt wird.

Eine ebenso vorteilhafte Weiterbildung der Erfindung zeigt einen einfachen, aber wirkungsvollen Weg einer weiteren Verbesserung auf. Vorzugsweise weist eine Kolbenstange eine höhere Materialgüte, insbesondere einen höheren Elastizitätsmodul als ein Kolben auf. Um die Flächenpressung an den Seitenwandungen in den materialspezifisch zulässigen Flächenpressungswerten zu halten, zugleich aber die Ringnuten auch nicht tiefer auszubilden als erforderlich, wurde die Lösung gefunden, den Kopplungsring in seiner Eingrifflage in den Kopplungspartner mit dem geringeren Elastizitätsmodul mit einer größeren Überdeckungsfläche eingreifen zu lassen. Als Überdeckungsfläche ist der Flächenanteil der axial gerichteten Seitenwandung des Kopplungsrings zu verstehen, mit dem er axial belastet auf der Seitenwandung der Nut eines Kopplungspartners aufliegt. Die Überdeckungsflächen können dabei auf einfache Weise durch die Tiefe der Ringnut des, den Kopplungsring nicht vollständig aufnehmenden, Kopplungspartners und die Breite der axial gerichteten Seitenwandung des Kopplungsrings bestimmt werden. In Kombination mit der bevorzugten Ausführungsform bei der die Kolbenstange als Hohlelement ausgeführt ist, kann die Tiefe der Ringnut in der Kolbenstange sehr gering ausgebildet werden, während der Kopplungsring in der Eingriffslage entsprechend tiefer in den Kolben eingreift.

Gemäß der Erfindung ist der Kopplungsring konisch ausgebildet.

Unter einer konischen Ausbildung wird in diesem Zusammenhang verstanden, dass der Kopplungsring einen Rechteckquerschnitt aufweist und dass sich aufgrund des Rechteckquerschnitts auf einer axialen Ober- und der Unterseite des Kopplungsrings zwei unterschiedlich Ringdurchmesser ausbilden, wobei die konische Ausbildung hierbei bewirkt, dass der Ringdurchmesser der Oberseite des Kopplungsrings kleiner ist als der Ringdurchmesser der Unterseite. Die radialen Begrenzungsflächen entsprechen somit der Mantelfläche eines flachen Kegelstumpfes.

Gleichzeitig ist die Ringnut des, den Kopplungsring nicht vollständig aufnehmenden Kopplungspartners so ausgebildet, dass bei einer Verformung des Kopplungsrings in Entspannrichtung ein Einkippen des konischen Kopplungsrings in die entsprechende Ringnut erfolgt und nach dessen Entspannung ein im Wesentlichen vollflächiges Anliegen der beiden axialen Wandungen des konischen Kopplungsrings an der jeweils korrespondierenden Wandung der beiden Ringnuten bewirkbar ist. Zur Herstellung der Formbarkeit eines konischen Kopplungsrings ist dieser segmentiert ausgebildet, wobei dies insbesondere durch axiale Einschnitte oder durch die Ausbildung des Kopplungsringes in mehreren Teilen erfolgen kann. Es lässt sich eine günstige, vergleichsweise geringe, Flächenpressung, was vor allem bei einem minderwertigeren Werkstoff insbesondere eines Kolbens vorteilhaft ist, bei einer gleichzeitig schmalen Ausführung des Kopplungsringes erreichen. Damit wird zugleich als besonderer Vorteil erreicht, dass die den Kopplungsring vollständig aufnehmende Ringnut lediglich so tief ausgebildet werden muss, wie es der Breite des Ringquerschnitts des konischen Kopplungsrings entspricht.

Durch eine derartige konische Ausbildung des Kopplungsrings wird eine besonders sichere und dauerfeste Verbindung der Kopplungspartner erzielt.

Des Weiteren sieht eine besonders vorteilhafte Ausbildung der Erfindung vor, dass in der, den Kopplungsring vollständig aufnehmenden Ringnut des jeweiligen Kopplungspartners ein elastisches Element vorgesehen ist.

Dieses elastische Element ist erfindungsgemäß so ausgebildet, dass dieses radial auf den Kopplungsring einwirkt und so dessen Verformung in Entspannrichtung optimiert.

Das elastische Element ermöglicht somit als Vorteil auf besonders einfache Art und Weise an jedem Punkt ein zuverlässiges Verformen des Kopplungsrings in dessen Entspannrichtung, wodurch, über die gesamte Länge des Kopplungsrings, dessen korrekter Sitz in den Ringnuten der Kopplungspartner gewährleistbar ist.

Das elastische Element kann dabei die federnde Spannbarkeit des Kopplungsrings auch vollständig allein übernehmen, wodurch Materialoptimierungen des Kopplungsrings ermöglicht werden.

In einer bevorzugten Weiterbildung der erfindungsgemäßen Kolbeneinheit sind in dem außenliegenden Kopplungspartner Zugangsöffnungen vorgesehen, welche ein, insbesondere mechanisches, Einwirken von Außen auf den Kopplungsring ermöglichen.

Durch das mechanische Einwirken auf den Kopplungsring wird dieser, im Bedarfsfall, soweit in die den Kopplungsring vollständig aufnehmende Ringnut des ersten oder zweiten Kopplungspartners eingedrückt, so dass ein Lösen der formschlüssigen Verbindung zwischen beiden Kopplungspartnern bewirkt wird. Die Kopplungspartner können danach wieder auseinandergezogen werden.

Das mechanische Einwirken kann dabei vorzugsweise durch Schrauben oder auch einfach durch Stifte erfolgen, die über ein spezielles Werkzeug nach innen verschoben werden bis die Fügungsebene der beiden Kopplungspartner von dem Kopplungsring unterschritten und so das Lösen des Formschlusses erzielt wird. Es kann somit als besonderer technologischer Vorteil eine lösbare Verbindung zwischen den Kopplungspartnern einer erfindungsgemäßen Kolbeneinheit bereitgestellt werden, welche eine Demontage der Kopplungspartner und ggf. eine Reparatur oder Revision ermöglicht.

Die Erfindung wird nachfolgend in Ausführungsbeispielen anhand von
- Fig. 1: Schnittdarstellung einer nicht zur Erfindung gehörigen Kolbeneinheit mit einem Kopplungsring
- Fig. 2: Halbschnitt einer nicht zur Erfindung gehörigen Kolbeneinheit mit zwei Kopplungsringen
- Fig. 3: Halbschnitt einer nicht zur Erfindung gehörigen Kolbeneinheit mit kreisrundem Kopplungsringquerschnitt
- Fig. 4: Halbschnitt Kolbeneinheit mit konischem Kopplungsring
- Fig. 5: Halbschnitt Kolbeneinheit mit konischem Kopplungsring und elastischem Element
- Fig. 6: Halbschnitt einer nicht zur Erfindung gehörigen Kolbeneinheit mit einem Kopplungsring und Zugangsöffnung
- Fig. 7: Detaildarstellung Kopplungspartner in Spielendlage näher erläutert.

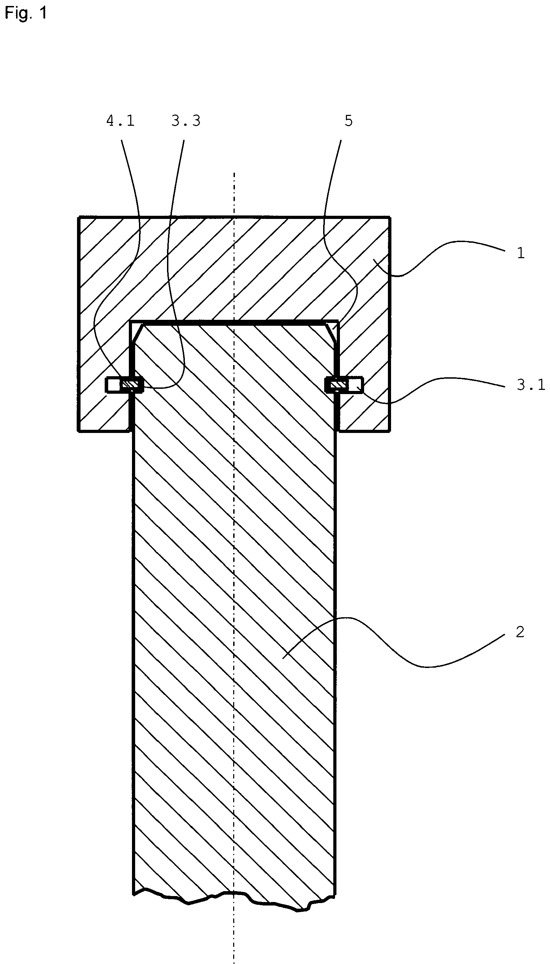

Fig. 1 zeigt eine Kolbeneinheit eines Arbeitszylinders im Vollschnitt.

Die Kolbeneinheit ist mehrteilig ausgebildet und weist einen Kolben 1 und eine Kolbenstange 2 auf, wobei die Kolbenstange 2 teilweise in den Kolben 1 eingeschoben ist.

Der Kolben 1 und die Kolbenstange 2 werden nachfolgend auch zusammengefasst als Kopplungspartner beschrieben.

Kolben 1 und Kolbenstange 2 sind mittels einer formschlüssigen Verbindung miteinander gekoppelt.

Die formschlüssige Verbindung wird vorliegend dadurch erreicht, dass innerhalb der Kolbeneinheit ein Kopplungsring 4.1 angeordnet ist.

Vorliegend weist der Kopplungsring 4.1 einen rechteckigen Querschnitt auf.

Zur Aufnahme des Kopplungsrings 4.1 weisen der Kolben 1 eine erste Ringnut 3.1 und die Kolbenstange 2 eine erste Ringnut 3.3 auf, wobei die erste Ringnut 3.1 des Kolbens 1 als umlaufende Innennut und die erste Ringnut 3.3 der Kolbenstange 2 als umlaufende Außennut ausgebildet sind.

Die erste Ringnut 3.1 des Kolbens 1 ist im vorliegenden Ausführungsbeispiel so ausgebildet, dass diese den Kopplungsring 4.1 vollständig und insbesondere soweit aufnehmen kann, dass ein komplikationsfreies Einschieben der Kolbenstange 2 in den Kolben 1 gewährleistet werden kann.

Während des Einschiebens der Kolbenstange 2 in den Kolben 1 wird der Kopplungsring 4.1 in die erste Ringnut 3.1 des Kolbens 1 gedrückt und dabei in seine Verspannrichtung verspannt.

Erreicht die Kolbenstange 2 ihre Montageendlage in dem Kolben 1, wobei sich die Ringnuten 3.1 und 3.3 korrespondierend gegenüberliegen, so wird es dem Kopplungsring 4.1 ermöglicht, sich in seine Entspannrichtung zu entspannen, wodurch ein gleichzeitiger Eingriff des Kopplungsrings 4.1 in die Ringnuten 3.1 und 3.3 herstellbar wird.

Der Formschluss der Kopplung des Kolbens 1 und der Kolbenstange 2 wird dadurch erzielt, dass in der Endlage der Kolbenstange 2 in dem Kolben 1, die dem kolbenseitigen Ende der Kolbenstange 2 zugewandte Oberfläche des Kopplungsrings 4.1 an der, dem Kopplungsring 4.1 zugewandten Wandungen der Ringnuten 3.1 und 3.3 anliegt.

Ein eventuelles Ausziehen der Kolbenstange 2 aus dem Kolben 1, insbesondere während einer Verwendung eines, eine Kolbeneinheit aufweisenden, Arbeitszylinders, wird somit wirkungsvoll vermieden.

Um während des Einschiebens der Kolbenstange 2 in den Kolben 1 das Eindrücken des Kopplungsrings 4.1 in die Ringnut 3.1 des Kolbens 1 zu bewirken, weist die Kolbenstange 2 an dem, dem Kolben 1 zugewandten Ende zusätzlich eine umlaufend ausgebildete Anlaufschräge 5 auf.

Als besonderes technologisches Merkmal weist der Außendurchmesser der Kolbenstange 2 gegenüber dem Innendurchmesser des Kolbens 1 ein Übermaß auf. Mittels des Übermaßes wird in der Montageendlage der Kolbenstange 2 eine Presspassung und somit ein Reibschluss zwischen dieser und dem Kolben 1 bereitgestellt.

Durch den bereitgestellten Reibschluss werden die Kolbenstange 2 und der Kolben 1 axial in deren Lage zueinander spielfrei festgelegt, wodurch ein axiales Wandern des Kolbens 1 gegenüber der Kolbenstange 2 wirksam unterbunden wird. Auf diese Weise sind Abriebschrotungen verhinderbar.

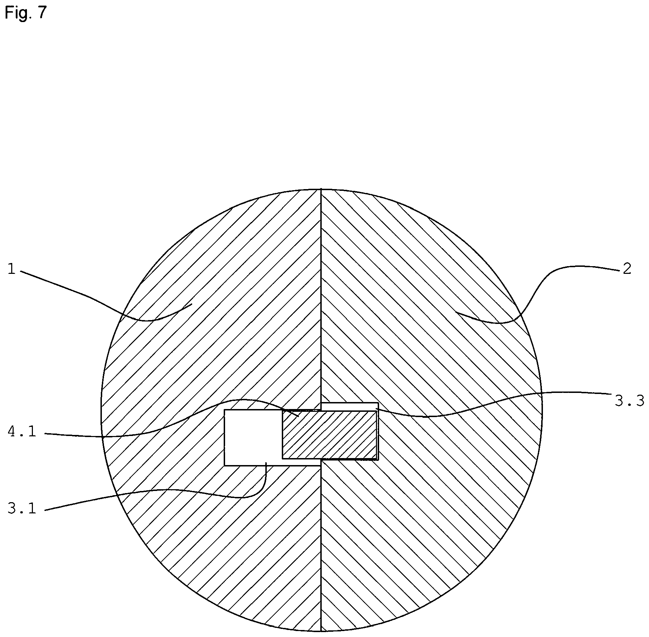

Zur Veranschaulichung wird auf Fig. 7 verwiesen, welche den Kolben 1 und die Kolbenstange 2 in deren Spielendlagen, sowie den Kopplungsring 4.1 in seiner Endposition in den Ringnuten 3.1 und 3.3 und ein - zur Veranschaulichung überhöht dargestelltes - Übermaß der Ringnuten 3.1 und 3.3 gegenüber dem Kopplungsring 4.1 in einer Detailansicht zeigt.

Fig. 8 zeigt die Relativposition von Kolben 1 und Kolbenstange 2, die diese durch die Belastung in einer axialen Spielendlage eingenommen haben.

Als weiterer Vorteil ermöglicht der bereitgestellte Reibschluss die Aufnahme axial wirkender Kräfte während einer Belastung des Arbeitszylinders und ein Verhindern eines unerwünschten Verdrehens des Kolbens 1 gegenüber der Kolbenstange 2. Insbesondere durch die zusätzliche Aufnahme axialer Kräfte durch den Reibschluss können Maximalbelastung und Dauerfestigkeit des Arbeitszylinders optimiert werden.

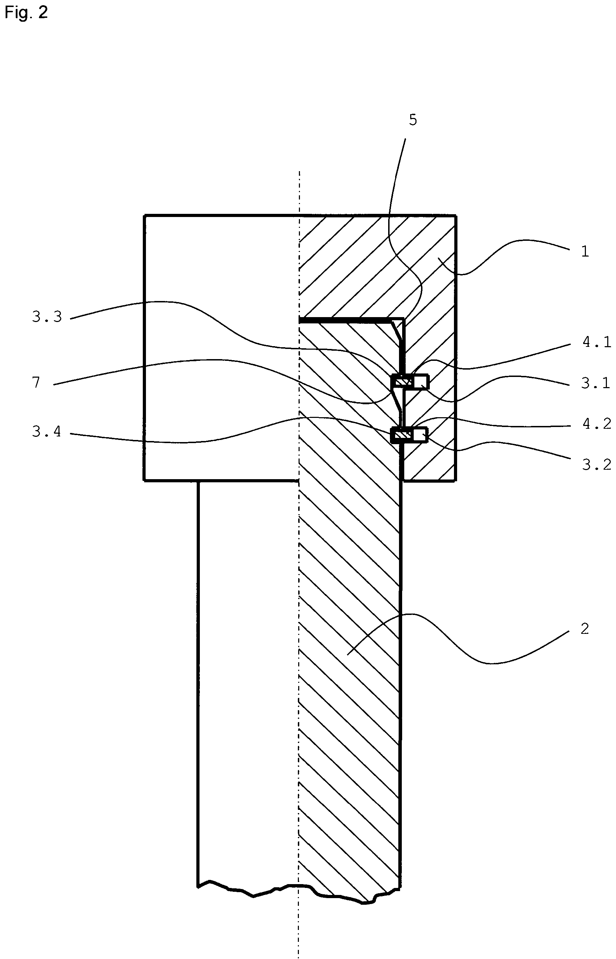

Fig. 2 zeigt eine weitere Kolbeneinheit im Halbschnitt, wobei die Kolbeneinheit zur Erhöhung der axialen Belastbarkeit, zwei Kopplungsringe 4.1 und 4.2 aufweist.

Vorliegend ist der Kopplungsring 4.1 in einer ersten Ringnut 3.1 des Kolbens 1 und in einer ersten Ringnut 3.3 der Kolbenstange 2 angeordnet.

Der Kopplungsring 4.2 ist dagegen in einer zweiten Ringnut 3.2 des Kolbens 1 und in einer zweiten Ringnut 3.4 der Kolbenstange 2 angeordnet.

Um ein vollständiges Einschieben der Kolbenstange 2 in den Kolben 1 zu gewährleisten, ist an der Ringnut 3.3 der Kolbenstange 2 eine Ringnutabschrägung 7 vorgesehen.

Diese Ringnutabschrägung 7 bewirkt auf besonders vorteilhafte Weise, dass der zweite Kopplungsring 4.2 nach dessen Entspannung in die Ringnut 3.1 von der Ringnutabschrägung 7 wieder in die Ringnut 3.3 des Kolbens 1 zurückgedrückt wird und so das Einschieben der Kolbenstange 2 in den Kolben 1 fortgeführt werden kann.

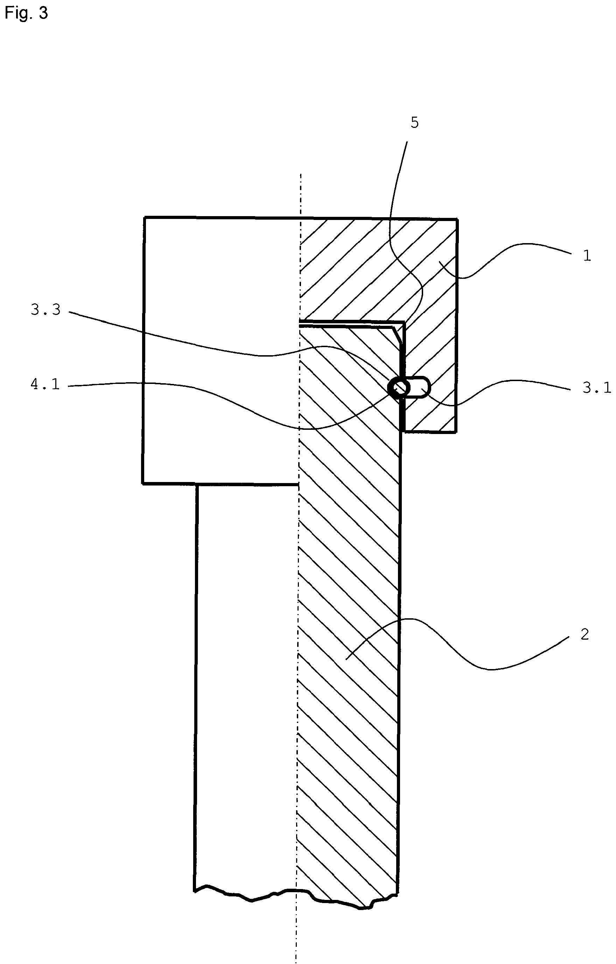

Gemäß Fig. 3 weist der Kopplungsring 4.1 einen kreisrunden Querschnitt auf.

Ein solcher kreisrunder Querschnitt geht besonders vorteilhaft mit einer Reduzierung der Herstellungskosten für den Kopplungsring 4.1 sowie mit einer Optimierung des Verlaufs der inneren Spannungen in dem Kopplungsring 4.1 während dessen Verspannung einher.

Um einen möglichst großen Bereich zu schaffen, in welchem sich ein Formschluss zwischen dem Kopplungsring 4.1 und der Ringnut 3.3 der Kolbenstange 2 einstellt, ist diese in deren Kontur an die Querschnittsgeometrie des Kopplungsrings 4.1 angepasst.

Das Anpassen der Ringnutkontur an den Querschnitt des Kopplungsrings 4.1 hat darüber hinaus den technologischen Vorteil, dass, aufgrund der sich einstellenden Rundungen der Ringnutkontur, Kerbwirkungen, welche bei einer Belastung der formschlüssigen Verbindung auftreten, weitestgehend vermieden werden können. Zusätzlich weist die Ringnut 3.1 in deren Nutengrund eine gerundete Kontur zur Verminderung der auftretenden Kerbwirkungen auf.

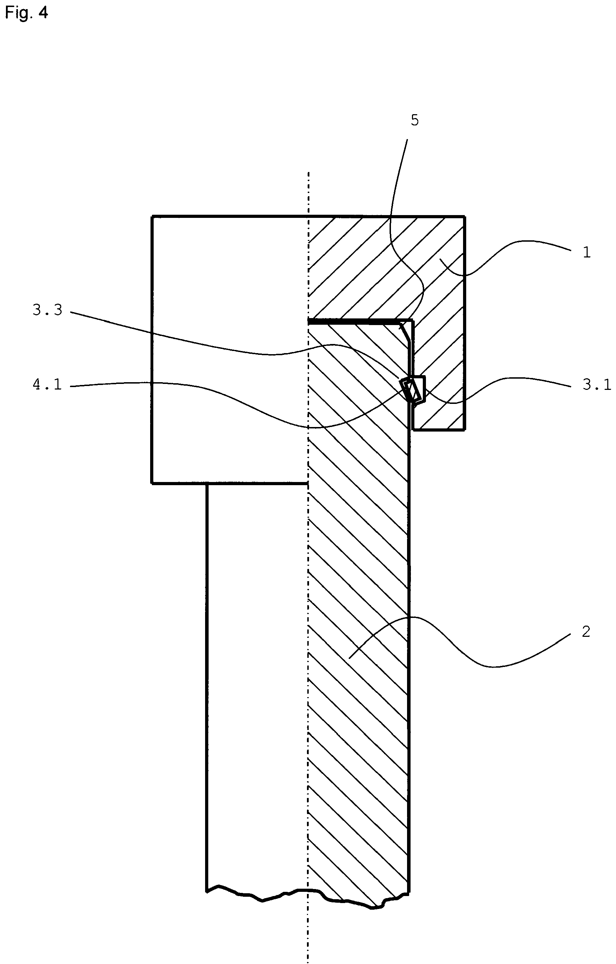

Als Ausführungsbeispiel zeigt Fig. 4 eine erfindungsgemäße Kolbeneinheit mit einem konisch ausgebildeten Kopplungsring 4.1, welcher mehrere Segmente aufweist.

In diesem Fall sind die Ringnuten 3.1 und 3.3 in deren geometrischer Ausformung so ausgebildet, dass bei Erreichen der Montageendlage der Kolbenstange 2 in dem Kolben 1, ein zumindest teilweises Einkippen der Segmente des Kopplungsrings 4.1 in die Ringnut 3.3 der Kolbenstange 2 erreicht wird.

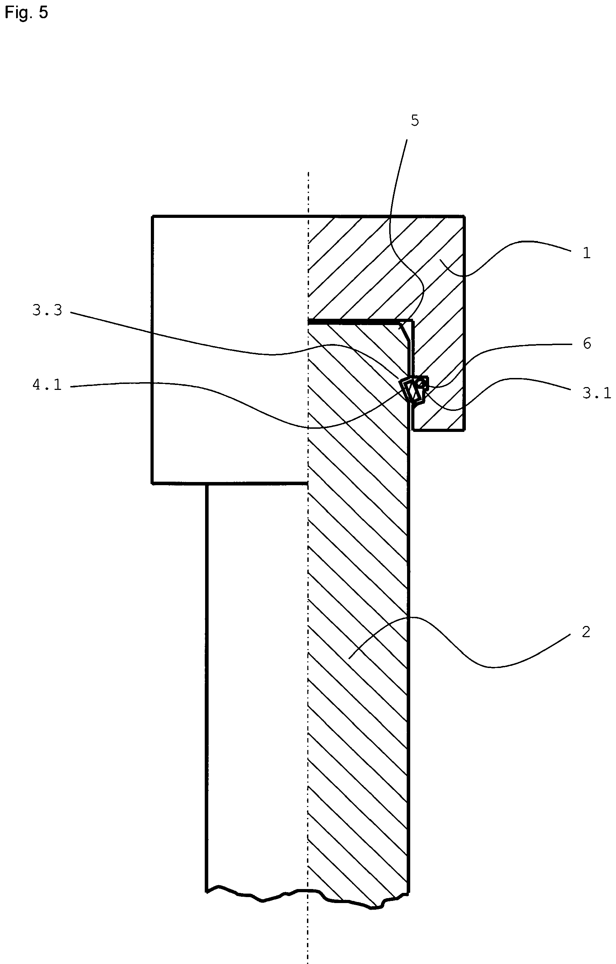

Fig. 5 zeigt eine Weiterbildung der Kolbeneinheit gemäß dem Ausführungsbeispiel aus Fig. 4.

Dabei weist eine Kolbeneinheit gemäß Fig. 5 zusätzlich ein elastisches Element 6 auf, welches erfindungsgemäß in der Ringnut 3.1 des Kolbens 1 angeordnet ist.

Das elastische Element 6 wirkt erfindungsgemäß radial auf den Kopplungsring 4.1 ein und unterstützt somit dessen Entspannung bei Erreichen der Endlage der Kolbenstange 2 in dem Kolben 1.

Des Weiteren wird durch das elastische Element 6 ein korrekter Sitz des Kopplungsrings 4.1 in den Ringnuten 3.1 und 3.3, auch bei einer ungenügenden Entspannung des Kopplungsrings 4.1, gewährleistet.

Das elastische Element 6 kann erfindungsgemäß beispielsweise durch ein Elastomerelement mit kreisrundem Querschnitt oder durch ein ebenso geformtes Gummielement gebildet werden.

Darüber hinaus können je nach Anwendungsfall auch elastische Elemente mit anderen Querschnitten verwendet werden.

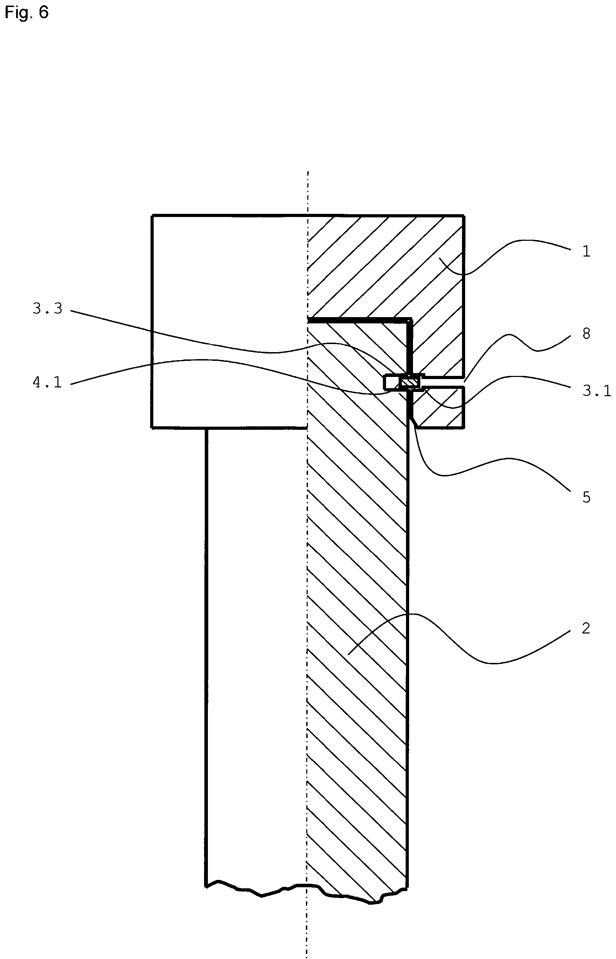

Fig. 6 zeigt eine weitere Kolbeneinheit.

Dabei sieht das Ausführungsbeispiel gemäß Fig. 6 zum einen vor, dass die, den Kopplungsring 4.1 vollständig aufnehmende, Ringnut durch die Ringnut 3.3 der Kolbenstange 2 gebildet wird und dass in dem Kolben 1 Zugangsöffnungen 8 angeordnet sind, über welche beispielsweise mittels eines geeigneten Werkzeuges (nicht dargestellt) oder einer Schraube (nicht dargestellt) ein Einwirken auf den Kopplungsring 4.1 von Außen ermöglicht wird. Vorzugsweise sind die Zugangsöffnungen um jeweils 120 Grad versetzt angeordnet.

Mittels einer derartigen äußeren Einwirkung auf den Kopplungsring 4.1 kann dieser auf besonders vorteilhafte Art und Weise wieder in die Ringnut 3.3 der Kolbenstange 2 zurückgedrückt und dadurch der Eingriff des Kopplungsrings 4.1 in die Ringnut des Kolbens 1 aufgehoben werden.

Somit wird als besonderer technologischer Vorteil eine lösbare Verbindung zwischen dem Kolben 1 und der Kolbenstange 2 bereitgestellt.

In einer besonders vorteilhaften Ausführungsform können die Zugangsöffnungen 8 mit einem Gewinde versehen sein, in welches eine Schraube (nicht dargestellt) einschraubbar ist, welche wiederum das Zurückdrücken des Kopplungsrings 4.1 in die Ringnut 3.3 der Kolbenstange 2 bewirkt.

### Verwendete Bezugszeichen

- 1: Kolben
- 2: Kolbenstange
- 3.1: erste Ringnut Kolben
- 3.2: zweite Ringnut Kolben
- 3.3: erste Ringnut Kolbenstange
- 3.4: zweite Ringnut Kolbenstange
- 4.1: erster Kopplungsring
- 4.2: zweiter Kopplungsring
- 5: Anlaufschräge
- 6: elastisches Element
- 7: Ringnutabschrägung der ersten Ringnut Kolbenstange
- 8: Zugangsöffnungen

## Patentansprüche

1. Kolbeneinheit eines Arbeitszylinders, aufweisend einen ersten Kopplungspartner und einen zweiten Kopplungspartner, wobei der erste Kopplungspartner als Kolben (1) und der zweite Kopplungspartner als Kolbenstange (2) ausgebildet sind und wobei der zweite Kopplungspartner in den ersten Kopplungspartner axial eingeschoben ist,
**dadurch gekennzeichnet,**
**dass** die Kopplungspartner jeweils eine Ringnut (3) aufweisen, wobei die Ringnut (3) des eingeschobenen Kopplungspartners durch eine Außennut und die Ringnut (3) des anderen Kopplungspartners durch eine Innennut gebildet werden und wobei sich die Ringnuten (3) der Kopplungspartner korrespondierend gegenüberliegen, und dass die Kolbeneinheit einen Kopplungsring (4) aufweist, welcher federnd spannbar ausgebildet ist und welcher, bei einer Verformung in Spannrichtung, vollständig von der Ringnut (3) eines Kopplungspartners aufnehmbar ist und welcher, bei einer Verformung in Entspannrichtung, in die Ringnuten (3) beider Kopplungspartner eingreift, wobei durch den Eingriff des Kopplungsrings (4) in die Ringnuten (3) beider Kopplungspartner eine formschlüssige Verbindung zwischen diesen bereitgestellt wird,
und **dass** der eingeschobene zweite Kopplungspartner, gegenüber einem Innendurchmesser des ersten Kopplungspartners, ein Übermaß aufweist, wobei zwischen den Kopplungspartnern eine kraftschlüssige Verbindung bereitgestellt wird,
**dadurch gekennzeichnet, dass** der Kopplungsring (4) konisch und segmentiert ausgebildet ist.

2. Kolbeneinheit nach Anspruch 1,
**dadurch gekennzeichnet,**
**dass** die Kolbenstange als Hohlelement ausgebildet ist, und dass der Kopplungsring (4) von der Ringnut (3) des Kolbens vollständig aufnehmbar ist.

3. Kolbeneinheit nach einem der vorhergehenden Ansprüche,
**dadurch gekennzeichnet,**
**dass** der Kopplungsring (4) oder der, den Kopplungsring (4) nicht vollständig aufnehmende Kopplungspartner, eine Anlaufschräge (5) aufweist, wobei durch die Anlaufschräge (5) die vollständige Aufnahme des Kopplungsrings (4) in der jeweiligen Ringnut (3) des, den Kopplungsring (4) vollständig aufnehmenden Kopplungspartners, bewirkt wird.

4. Kolbeneinheit nach einem der vorhergehenden Ansprüche,
**dadurch gekennzeichnet,**
**dass** die Kopplungspartner weitere, axial versetzte, Ringnuten (3) zur Aufnahme weiterer, axial versetzter, Kopplungsringe (4) aufweisen.

5. Kolbeneinheit nach einem der vorhergehenden Ansprüche,
**dadurch gekennzeichnet,**
**dass** der erste und der zweite Kopplungspartner unterschiedlich hohe Elastizitätsmoduln aufweisen, wobei eine erste Überdeckungsfläche des im Eingriff stehenden Kopplungsrings (4) mit einer Seitenwandung der Ringnut (3) des einen Kopplungspartners mit dem höheren Elastizitätsmodul kleiner ist als eine zweite Überdeckungsfläche des Kopplungsrings (4) mit einer Seitenwandung der Ringnut (3) des anderen Kopplungspartners mit dem niedrigeren Elastizitätsmodul.

6. Kolbeneinheit nach einem der vorhergehenden Ansprüche, **dadurch gekennzeichnet,**
**dass** in der, den Kopplungsring (4) vollständig aufnehmenden Ringnut (3) des ersten oder zweiten Kopplungspartners, ein auf den Kopplungsring (4) radial einwirkendes elastisches Element (6) vorgesehen ist.

7. Kolbeneinheit nach einem der vorhergehenden Ansprüche, **dadurch gekennzeichnet,**
**dass** der nicht eingeschobene Kopplungspartner radial angeordnete Zugangsöffnungen (8) aufweist, wobei durch die Zugangsöffnungen (8) ein Einwirken von Außen auf den Kopplungsring (4) ermöglicht wird.

## Claims

1. A piston unit of a working cylinder, comprising a first coupling partner and a second coupling partner, wherein the first coupling partner is designed as a piston (1) and the second coupling partner as a piston rod (2), and wherein the second coupling partner is inserted axially in the first coupling partner,
**characterized in**
**that** the coupling partners each have an annular groove (3), wherein the annular groove (3) of the inserted coupling partner is formed by an outer groove and the annular groove (3) of the second coupling partner is formed by an inner groove, and wherein the annular grooves (3) of the coupling partners correspondingly face each other, and that the piston unit has a coupling ring (4), which is elastically tensionable and which, in the event of a deformation in the tensioning direction, can be completely accommodated by the annular groove (3) of one coupling partner and which, in the event of a deformation in the relaxation direction, engages in the annular grooves (3) of both coupling partners, wherein a positive connection is provided between the two coupling partners by the engagement of the coupling ring (4) in their annular grooves (3),
and **that** the inserted second coupling partner has an oversize relative to an inner diameter of the first coupling partner, wherein a frictional connection is provided between the coupling partners,
**characterized in that** the coupling ring (4) has a conical and segmented design.

2. The piston unit according to claim 1,
**characterized in**
**that** the piston rod is designed as a hollow element, and that the coupling ring (4) can be completely accommodated by the annular groove (3) of the piston.

3. The piston unit according to one of the previous claims,
**characterized in**
**that** the coupling ring (4) or the coupling partner which does not completely accommodate the coupling ring (4) has a batter inclination (5), wherein the batter inclination (5) effects the complete accommodation of the coupling ring (4) in the respective annular groove (3) of the coupling partner which completely accommodates the coupling ring (4).

4. The piston unit according to one of the previous claims,
**characterized in**
**that** the coupling partners have further, axially offset annular grooves (3) for accommodating further, axially offset coupling rings (4).

5. The piston unit according to one of the previous claims,
**characterized in**
**that** the first and second coupling partners have different levels of elasticity moduli, wherein a first surface section of the engaged coupling ring (4) overlapping with a side wall of the annular groove (3) of the coupling partner having the higher elasticity modulus is smaller than a second surface section of the coupling ring (4) overlapping with a side wall of the annular groove (3) of the other coupling partner having the lower elasticity modulus.

6. The piston unit according to one of the previous claims,
**characterized in**
**that** an elastic element (6) acting radially on the coupling ring (4) is provided in the annular groove (3) of the first or second coupling partner which completely accommodates the coupling ring (4).

7. The piston unit according to one of the previous claims,
**characterized in**
**that** the coupling partner which is not inserted has radially arranged access openings (8), wherein the access openings (8) allow to act on the coupling ring (4) from the outside.

## Revendications

1. Unité à piston d'un vérin présentant un premier partenaire d'accouplement et un deuxième partenaire d'accouplement, le premier se présentant sous la forme d'un piston (1) et le deuxième sous la forme d'une tige à piston (2) et le deuxième partenaire d'accouplement étant introduit axialement dans le premier partenaire d'accouplement, est **caractérisée en ce que** les partenaires d'accouplement présentant respectivement une rainure annulaire (3), la rainure annulaire (3) du partenaire d'accouplement introduit étant formée par une rainure extérieure et la rainure annulaire (3) de l'autre partenaire d'accouplement par une rainure intérieure et les rainures annulaires (3) des partenaires d'accouplement se faisant face de manière correspondante, et que l'unité à piston est munie d'une bague d'accouplement (4), qui est conçue pour être serrée de manière à faire ressort et qui, lors d'une déformation dans la direction de serrage, peut être prise entièrement par la rainure annulaire (3) d'un partenaire d'accouplement et qui, lors d'une déformation dans la direction de déserrage, pénètre dans les rainures annulaires (3) des deux partenaires d'accouplement, l'introduction de la bague d'accouplement (4) dans les rainures annulaires (3) des deux partenaires d'accouplement créant un assemblage par complémentarité de forme entre eux,
et que le deuxième partenaire d'accouplement introduit est surdimensionné par rapport à un diamètre intérieur du premier partenaire d'accouplement, ce qui crée un assemblage à force supplémentaire entre les deux partenaires d'accouplement,
est **caractérisée en ce que** la bague d'accouplement (4) st réalisée sous forme conique et segmentée.

2. Unité à piston suivant la revendication 1
est **caractérisée en ce que**
la tige à piston se présente sous la forme d'un élément creux et que la bague d'accouplement (4) peut être prise entièrement par la rainure annulaire (3) du piston.

3. Unité à piston suivant une des revendications précédentes
est **caractérisé en ce que**
la bague d'accouplement (4) ou le partenaire d'accouplement qui ne loge pas complètement la bague d'accouplement (4), présente un biais d'attaque (5) et ce biais d'attaque (5) provoque le logement complet de la bague d'accouplement (4) dans la rainure angulaire (3) respective du partenaire d'accouplement qui loge la bague d'accouplement (4) de façon complète.

4. Unité à piston suivant une des revendications précédentes
est **caractérisé en ce que**
les partenaires d'accouplement présentent d'autres rainures angulaires (3) axialement décalées pour le logement d'autres bagues d'accouplement axialement décalées.

5. Unité à piston suivant une des revendications précédentes
est **caractérisé en ce que**
le premier et le deuxième partenaire d'accouplement présentent des modules d'élasticité différents, et une première surface de recouvrement de la bague d'accouplement (4) en prise avec une paroi latérale de la rainure annulaire (3) du partenaire d'accouplement avec le plus haut module d'élasticité étant plus petite que la deuxième surface de recouvrement de la bague d'accouplement (4) en prise avec une paroi latérale de la rainure annulaire (3) de l'autre partenaire d'accouplement avec le plus bas module d'élasticité.

6. Unité à piston suivant une des revendications précédentes
est **caractérisé en ce que**
un élément élastique (6) agissant radialement sur la bague d'accouplement (4) est prévu dans la rainure annulaire (3) du premier ou deuxième partenaire d'accouplement pour le logement complet de la bague d'accouplement (4).

7. Unité à piston suivant une des revendications précédentes
est **caractérisé en ce que**
le partenaire d'accouplement non introduit présente des ouvertures d'accès disposées radialement (8), lesdites ouvertures d'accès (8) permettant d'agir sur la bague d'accouplement (4) de l'extérieur.
